# EUROPEAN PATENT SPECIFICATION

(11) **EP 2 522 564 B1**
(45) Date of publication and mention of the grant of the patent: **06.08.2014**
(21) Application number: 11166053.6
(22) Date of filing: 13.05.2011
(51) Int. Cl.: B62D 33/07, B62D 33/06

(54) **Anchor device for anchoring a cabin of an industrial vehicle to the chassis of the vehicle itself**
Ankervorrichtung zur direkten Verankerung der Kabine eines Industriefahrzeugs im Rahmen des Fahrzeugs
Dispositif d'ancrage pour la fixation d'une cabine de véhicule industriel sur le châssis du véhicule

(43) Date of publication of application: 14.11.2012
(73) Proprietor: IVECO S.p.A., 10156 Torino (IT); De Molli Giancarlo Industrie S.p.A., 21040 Castronno (VA) (IT)
(72) Inventor: De Molli, Romeo, 21040, CASTRONNO (IT); Zogno, Stefano, 10015, IVREA (IT)
(74) Representative: Cinquantini, Bruno

(56) References cited:
- EP-A2- 1 849 689
- GB-A- 1 592 054
- US-A- 5 025 880

## Description

### FIELD OF THE INVENTION

The present invention belongs to the field of the production of industrial vehicles with medium and/or high capacity. More in particular, the invention relates to an anchor device for anchoring a tilt cab of an industrial vehicle to the chassis of the vehicle itself.

### DESCRIPTION OF THE PRIOR ART

In the field of the production of industrial vehicles with medium and/or high capacity, it is known that some models of such vehicles use a forward tilt cab with respect to the chassis. Such solution aims to allow an easy access to the engine or to other components placed beneath the cabin itself. It is also known to use devices for anchoring the cabin to the chassis. In particular, such devices have a first "anchor" operating configuration, wherein they firmly anchor the cabin to the chassis, while in their second "release" configuration they allow the cabin itself to tilt. The traditional anchor devices usually comprise two main components, namely a coupling pin and a locking unit. One of these components is joined to the cabin, while the other is joined to the chassis of the industrial vehicle supporting the cabin itself.

A solution known in the art provides a locking unit comprising a box formed by a pair of metal parallel flanks, which define a groove where the coupling pin is inserted. The locking unit includes also a coupling lever, hinged between the flanks of the box. Such lever pivots between a first position wherein it blocks the coupling pin in the groove of the box and a second position wherein the coupling pin is no longer constrained in the groove 9. Such condition substantially allows the tilting movement of the cabin with respect to the chassis.

Such locking unit comprises also a check lever acting on the coupling lever. In particular, also the check lever pivots between at least a first position, wherein it retains the coupling lever in the first position described above, and a second position wherein it does not act on the coupling lever. In particular the check lever is retained in the first operating position as a consequence of the force exerted by an elastic element acting on the lever itself. Such locking unit comprises also an actuator which has the function of pivoting the check lever towards the second operating position in order to release the latter from the coupling lever, allowing a rapid pivoting of the latter towards the second operating position, consequently to the action of an elastic element.

The solution described above is known in the art, but has a number of drawbacks, the first of which concerns the limited reliability of the device. As it can be observed, indeed, the operating arm of the check lever acts on the coupling lever exerting a compression on an arm of the coupling lever itself. In particular, the check lever acts on the arm of the coupling lever, which does not prevent, directly, the releasing of the coupling pin.

It has been observed that, as a result of this operating condition, the tractive force is actually taken up by the pin around which the coupling lever pivots. As a consequence, in order to make the pin take up such force, it is necessary to increase the thickness of both the pin of the coupling lever and the flanks of the box. Such solution is necessary to ensure that the locking unit has enough strength and reliability. Such aspect, however, is very critical, since it directly increases the production costs of the device. Increasing the thickness of the box's flanks means to affect heavily and negatively the quantity of material used, and thus the overall weight of the anchor device.

Furthermore, it has been observed that the surface of the coupling lever affected by the action of the check lever is the same that comes into contact with the coupling pin when the mechanism is reset. Consequently such surface is constantly subject to superficial wear, which affects negatively the life and the reliability of the coupling lever.

Another extremely negative aspect relates to the position of the actuator that triggers the check lever, thus determining the pivoting of the coupling lever and consequently the release of the coupling pin. Such actuator acts on a second arm of the check lever that is opposite to the first arm of the same lever acting on the coupling lever. Given the interaction principle between the two levers, the actuator is necessarily placed along an inclined direction with respect to the longitudinal direction of the containment box, remarkably affecting the longitudinal extension of the locking unit and thus its overall bulk. In the technical field, the need of "compact" anchor devices is strongly felt, and is not fulfilled yet, due to reasons of design, cost and easiness to use. According to the above mentioned considerations, the need for a new anchor device is evident, having a limited number of components, but with an improved compactness and mechanical resistance with respect to the known solutions.

### SUMMARY OF THE INVENTION

On the base of these considerations, the main task of the present invention is to provide an anchor device which allows to overcome the drawbacks mentioned above. In the scope of this task, a first aim of the present invention is to provide an anchor device with improved mechanical resistance characteristics with respect to the known devices used for the same purpose. Another aim of the present invention, is to provide a device with a particularly compact configuration, namely with a limited bulk and a limited weight. Not least, the purpose of the present invention is to provide an anchor device which is reliable and easy to manufacture with competitive costs.

This task and these aims are achieved by means of an anchor device according to what stated in claim 1.

In particular, the coupling device according to the invention has improved characteristics of resistance and reliability. The interaction principle between the levers of the locking unit allows a firmer coupling action. In other words, the mechanism's counter action to the loads, also of impulse type, acting on the coupling pin when the coupling lever is in the corresponding coupling position, is more effective. It can be observed that the position of the axis of rotation of the check lever allows an improved distribution of the stresses acting on the mechanism. In fact, such stresses are distributed on both rotation pins of the levers of the locking unit, instead of concentrating on a single pin, as it occurs in the known solutions. This allows to advantageously limit the thickness of the flanks of the locking unit and thus the overall weight of the locking unit. Furthermore, it can be observed that the new interaction principle between the two levers of the locking unit allows generally to contain the overall bulk of the unit itself, with remarkable advantages from the point of view of the production costs and of the versatility of use.

### LIST OF THE FIGURES

Further characteristics and advantages will become more evident from the following detailed description of an anchor device according to the present invention, that is shown in a merely illustrative and not limitative form in the attached drawings wherein:
- Figure 1 shows a perspective view of an anchor device according to the present invention;
- Figure 2 shows lateral view of the device of Figure 1;
- Figure 3 shows a view of the device of Figure 1 in a coupled configuration of the coupling pin, so that the coupling lever is in coupling position and the check lever is in its first operating position;
- Figure 4 is a view of the device of Figure 1 releasing the coupling pin wherein the check lever moves from the first to the second operating position, as a consequence of the action of the actuator;
- Figure 5 shows a view of the device of Figure 1 in a released configuration of the coupling pin, wherein the coupling lever is in released position and the check lever is in its first operating position;
- figure 6 shows a view of the device of Figure 1 during the reset of the device itself.

### DETAILED DESCRIPTION OF THE INVENTION

With reference to the mentioned figures, the anchor device 1 according to the invention comprises two main components, namely a coupling pin 5 and a locking unit 10 of the coupling pin. One of these components, (for example the coupling pin 5) is intended to be connected to a tilt cab of an industrial vehicle, while the other component (the locking unit 10, according to the same example) is intended to be connected to the chassis supporting the cabin itself.

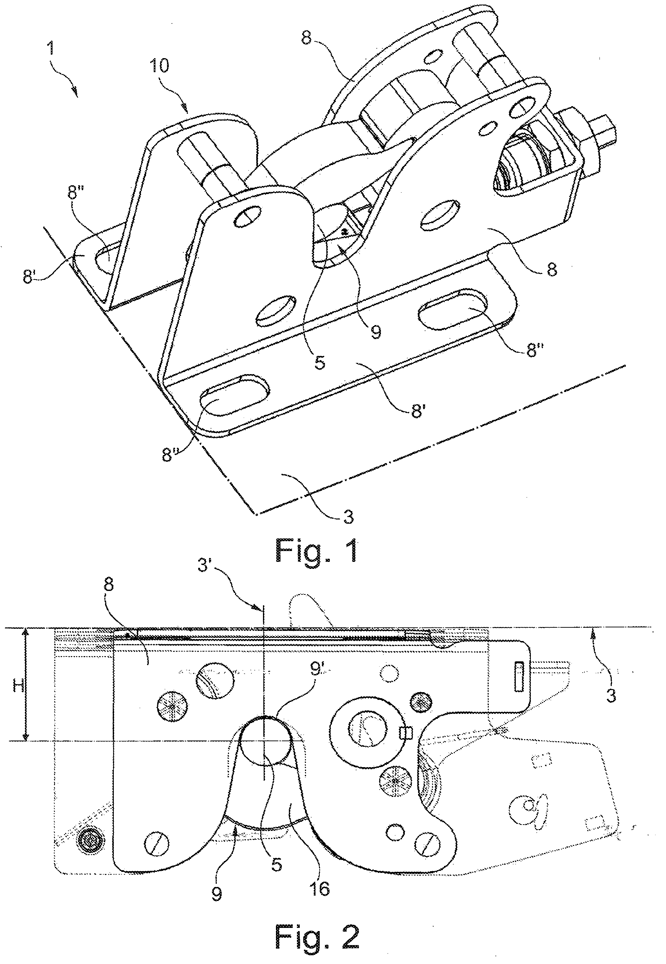

Figure 1 shows a perspective view of a possible embodiment of the locking unit 10, which comprises a pair of metal support flanks 8, defining a base plane 3. In particular, the flanks 8 develop from such base plane 3 according to a plane orthogonal to the base plane 3 itself. The flanks 8 define a positioning groove 9 for inserting the centering pin 5. Such groove 9 develops from one side of said flanks 8, opposite to the base plan 3 and according to the same direction as the base plan 3. With reference to Figure 2, it can be observed that the positioning groove 9 (in the following also indicated by groove 9) comprises a semicircular portion 9' which defines a limit stop position for the coupling pin 5. For the purposes of the present invention, such limit stop position is defined by the position occupied by the axis 100 of the coupling pin 5 with respect to the base plane 3. In figure 2 such position is indicated at a distance H from the base plane 3.

With reference again to the view of figure 2, it can be observed that at least the final part of the groove 9, namely the one adjacent to the semicircular portion 9', develops symmetrically with respect to a reference plane 3' orthogonal to the base plane 3.

With reference again to Figure 1, each one of the flanks 8 of the locking unit 10 comprises a connecting portion 8' which develops outwards with respect to the volume of space comprised between the flanks themselves. Such connecting portions 8' have the aim to allow the connection of the locking unit 10 to the tilt cab or to the chassis of an industrial vehicle, depending on its installation. Thus, they comprise openings 8" for positioning connecting elements (not shown in the figures). It can be observed that, in the solution shown in figure, the connecting portions 8' substantially lie on the base plane 3, but they may alternatively develop laterally from the respective flank, at a certain distance from the same base plane 3.

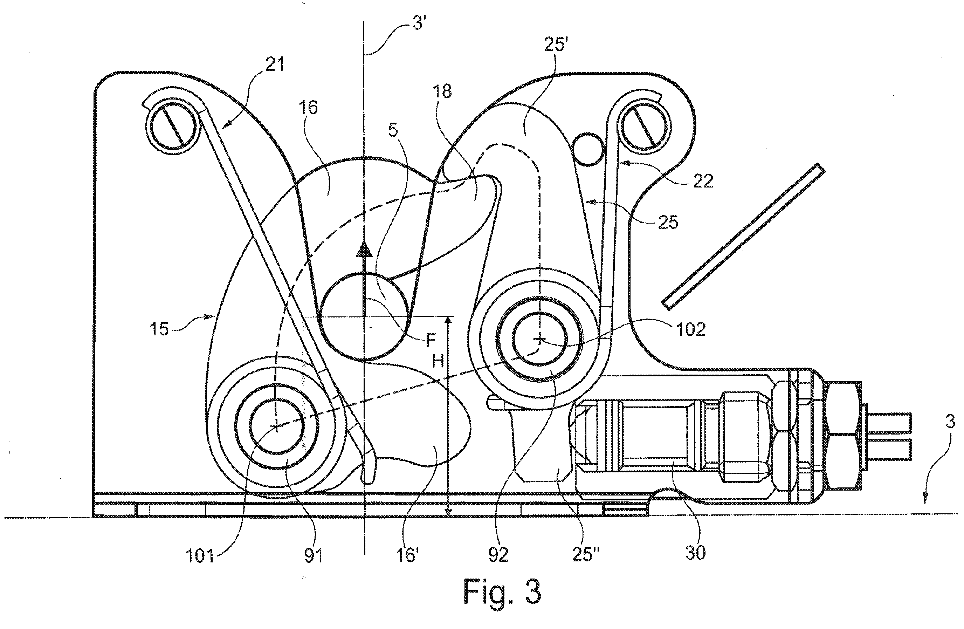

The figure 3 shows the mechanism of the locking unit 10 of figure 1. Such mechanism comprises a coupling lever 15 pivoted between the flanks 8, so that it can pivot around a first pin 91 which defines a first axis of rotation 101. In particular such first pin 91 is arranged on a first side (or semi-space) with respect to the reference plane 3' and in a position near the base plane 3. In particular, the first axis of rotation 101 of the coupling lever 15 is arranged in a position near the base plane 3 and at a distance evaluated in relation to the base plane 3 itself, lower than the distance of the axis 100 of the coupling pin 5 considered in the limit stop position. Such arrangement allows to limit the transverse dimensions of the locking unit 10, namely its extension according to a direction orthogonal to the reference plane 3'.

The coupling lever 15 rotates opposing to a first elastic element 21 between a coupling position, wherein it blocks the coupling pivot 5 in the limit stop position, and a release position, wherein the coupling lever 15 stops exerting a locking action on the coupling pivot 5. In particular, the coupling lever 15 comprises a locking arm 16 which, in correspondence of said coupling position, directly opposes the release movement of the coupling pin 5 from the limit stop position defined by the groove 9.

The locking unit 10 also comprises a check lever 25 pivoting between said flanks 8 by means of a second pin 92 which defines a second axis of rotation 102. In particular, such second axis of rotation 101 is arranged on a second side with respect to the reference plane 3' mentioned above. The check lever 25 rotates, opposing a second elastic element 22, between a first operating position wherein it exerts a check action on said coupling lever 15 and a second operating position wherein it does not exert any action on the coupling lever 15 allowing its pivoting from the coupling position to the release position.

The locking unit 10 according to the invention also comprises an actuator 30, preferably pneumatic, which, once it is activated, acts on the check lever 25 and pivots the same lever from the first operating position to the second operating position. According to the present invention, the check lever 25 comprises a first operating arm 25', which exerts a check force on the locking arm 16 of the coupling lever 15 when the check lever 25 occupies the first operating position.

Furthermore according to the present invention, the axis of rotation 102 of the check lever 15 is arranged in an intermediate position between the position wherein said first operating position 25' comes into contact with the locking arm 16 and the base plane 3 from which the flanks 8 of the locking unit 10 develop.

The way the coupling lever 15 and the check lever 25, combined with the position given to the axis of rotation 102 of the check lever 25, cooperate allows to obtain a strong locking action. The two levers 15, 25 and their respective flanks 8, supporting the levers themselves, define a closed ring structure, schematically indicated in figure 3 by a dotted line. Such solution strengthen the locking, consequently improving the reliability of the anchor device 1.

Furthermore it can be observed that the interaction of the lever 15, 25 combined with the position given to the axis of rotation 102 of the check lever 25, allows to optimize advantageously the distribution of the stresses. In fact, a possible stress F exerted on the coupling pin 5 when the pin itself is locked (condition shown in Figure 3) is advantageously taken up by both pins 91, 92 around which the two levers 15, 25 of the mechanism of the locking unit 10 rotate. Substantially a stress F on the coupling pin 5 generate a traction reaction on both pins. This means that the traction loads are taken up on a vast surface of the flanks 8. Such condition, in its turn, means that it is possible to reduce the thickness of the flanks themselves and thus the overall weight of the locking unit 10.

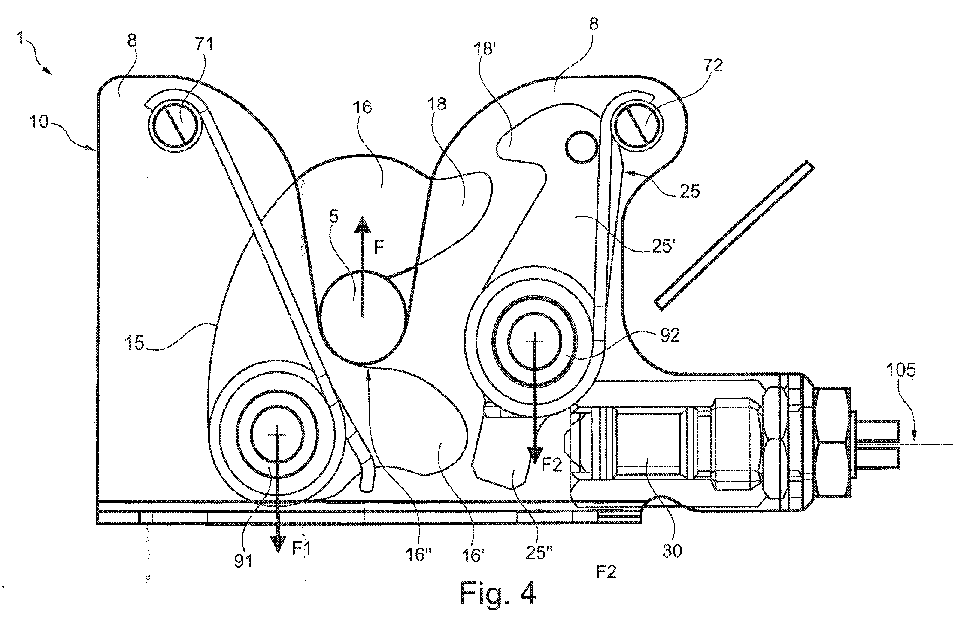

According to a preferred embodiment of the invention, the axis of rotation of the check lever 25 is arranged, with respect to the base plane 3, in an intermediate position between the position of the axis 100 of the coupling pin 5 in the limit stop position and the position of the first axis of rotation 101 of the coupling lever 15. It has been observed that such position of the axis of rotation 102 of the check lever 25 allows an optimization of the distribution of the traction loads between the rotation pin of the levers 15 and 25. In fact, in such condition, the traction stress F on the coupling pin 5 is divided into two traction stresses F1 and F2 (see figure 4) substantially equivalent on the different pins of the levers 15, 25.

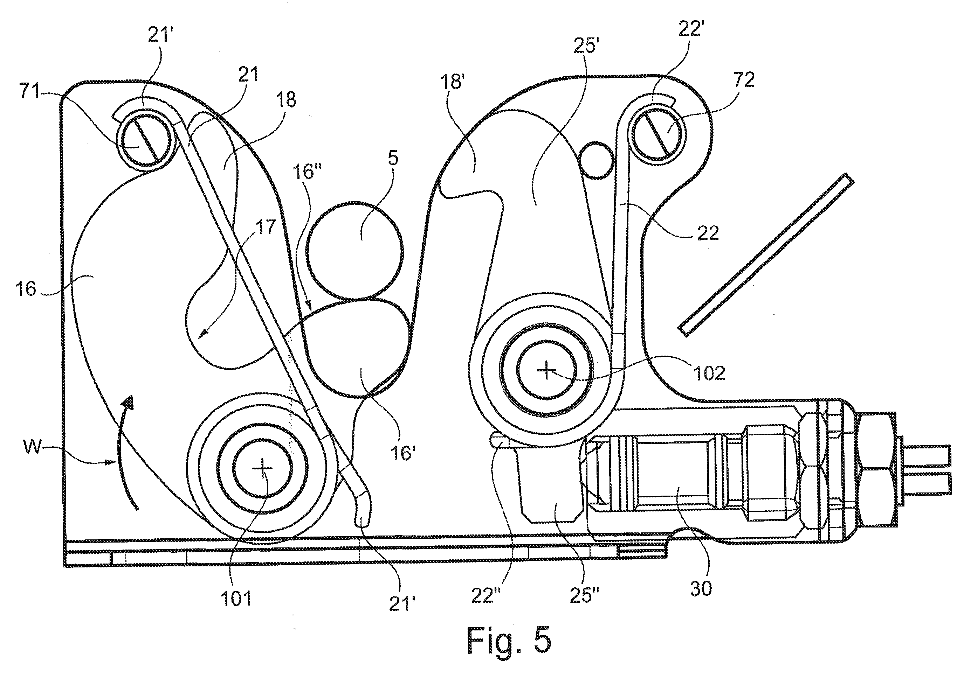

With reference to figure 5, the coupling lever 15 comprises a hook-shaped profile defined by the locking arm 16 indicated above and by a thrust arm 16'. The body of the coupling lever 15 preferably comprises a connecting portion 17 shaped with circular sector which develops between the locking arm 16 and the thrust arm 16'. Such connecting portion 17 has a diameter corresponding to the coupling pin 5. As shown in figure 3, when the coupling lever 15 occupies the locking position, the connecting portion 17 encircles the coupling pin 5 for at least half of its circumference, keeping it, thanks to the corresponding radius, firmly in the limit stop position defined by the groove.

The thrust arm 16' of the coupling lever 15 comprises a contact portion 16" shaped so that it moves the coupling pin 5 away from the limit stop position, during the pivoting of the coupling lever from the coupling position to the release position. Such contact portion 16" also have the function to allow the "reset" of the locking unit 10, indicating by such expression the counter-rotation of the coupling lever 15 from the release position to the coupling position.

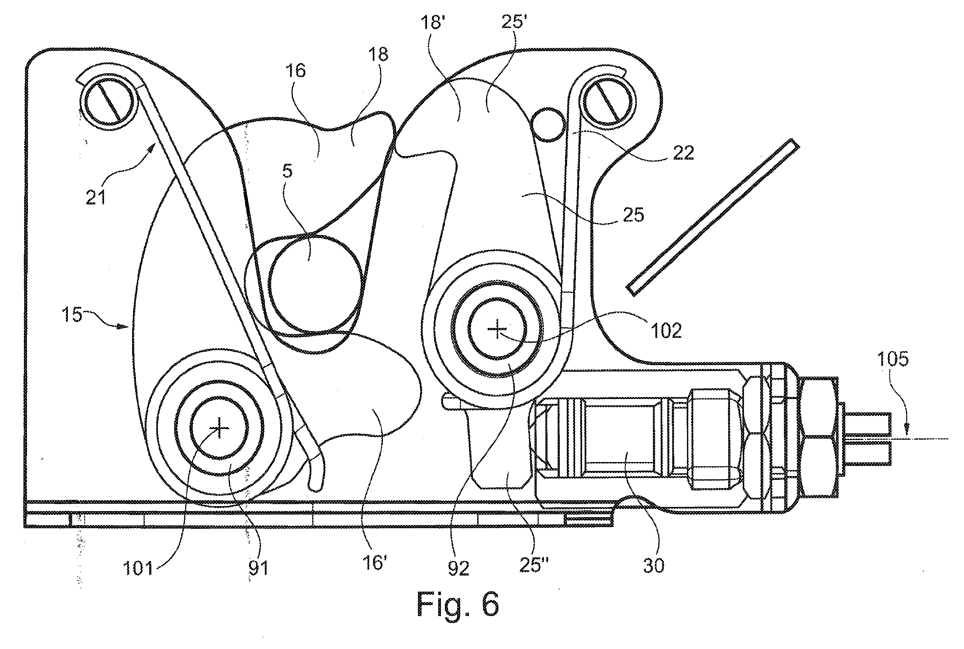

On this point, starting from the condition in figure 5 (coupling lever 15 in release position), the coupling pin 5, during its movement towards the limit stop position defined by the positioning groove 9, exerts a thrust on the contact portion 16" of the thrust arm 16, generating a clockwise pivoting (indicated by the reference V) of the coupling lever 15. In particular, the position of the contact point between the coupling pin 15 and the operating portion 16" varies since it moves continually towards the connecting portion 17, as it is evident in figure 6. When the coupling pin 5 reaches the limit stop position, the pivoting of the coupling lever 15 stops.

In the embodiments shown in the figures, the first elastic element 21 acting on the coupling lever 15 comprises an helical spring coaxial with the first pin 91 around which the coupling lever 15 rotates. Such helical spring comprises a first end 21' connected to a first pin 71 spacing the flanks 8 and a second end 21" acting, on the contrary, on the coupling lever 15.

According to a preferred embodiment of the invention, shown in figure 3, the locking arm 16 has an extension so that, when the coupling lever 15 occupies the coupling position, a first contact portion 18 of the same first arm 16 is placed between the flanks 8 of the same semi-space (defined by the reference plan 3') wherein the check lever 25 is placed. The check lever 25 exerts its check action on the coupling lever 15 in correspondence of such first contact portion 18 of the locking arm 16.

It can be observed that the first contact portion 18 of the locking arm 16 is substantially hook-shaped and protrudes outwards, namely in a direction opposite to the base plane 3. The first operating arm 25' of the check lever 25 defines a second contact portion 18' hook-shaped toward the base plane 3. In the locking configuration shown in figure 3, the second contact portion 18' acts on the first contact portion 18. The fact that the two contact portions 18, 18' are hook-shaped advantageously facilitates the check action, improving the locking of the coupling pin 5.

Always with reference to the solution in figure 3, it can be observed that the second elastic element 22 acting on the check lever 25 comprises, also in this case, a helical spring coaxial with the second rotation pin 92 around which the check lever 25 pivots. As shown in figure 5, for example, a first end 22' of the spring is connected to a second pin 72 spacing the flanks 8, while a second end acts directly on the check lever 25.

With reference to figure 4, the check lever 25 comprises a second operating arm 25" opposite to the first operating arm 25' with respect to the axis of rotation 102 of the check lever itself 25. The pneumatic actuator 30 acts on such second operating arm 25" in order to pivot the check lever 25 from the first operating position to the second operating position. As shown in figure 4, the pneumatic actuator 30 is placed between the two flanks 8 in a position adjacent to the base plane 3 from which the flanks themselves develop. In particular the actuator 30 is placed so that it exerts a force according to a direction of action 105 substantially parallel to the base plane 3 itself and orthogonal to the axis of rotation 101, 102 of the two levers 15, 25 of the locking unit 10.

Such particular arrangement of the actuator 30 allows first of all to limit the longitudinal dimensions of the locking unit 10, namely according to a direction parallel to the direction of action 105. On this point, in figure 2 a continuous line indicates the locking unit 10 according to the invention, and a dotted line the profile of a locking unit known in the art and corresponding to the solution described above and known in the art. As this figure clearly shows, the bulk of the locking unit 10 according to the present invention is smaller, above all according to the direction of action 105. Its reduced extension according to this direction is achieved thanks to the position occupied by the actuator 30. A reduced bulk results also in a reduced weight and, consequently, in a reduced overall realization cost.

With reference to figures from 3 to 6, for the sake of completeness the following description describes the functioning principle of the anchor device according to the invention, starting from the locking configuration shown in figure 3. In such condition, the coupling pin 5 occupies the limit stop position in the groove 9 defined by the flanks 8. The coupling pin is kept in such position by the locking arm 16 of the coupling lever 15. The second hook-shaped contact portion 18' of the first operating arm 25' of the check lever 25 acts on the first hook-shaped contact portion 18 of the locking arm 16. The former is kept in the first operating position by means of the force exerted by the second elastic element 22.

With reference to figure 4, when the actuator 30 is actuated, the latter acts on the second operating arm 25" of the check lever 25 making it pivot (clockwise, according to the view of figure 4), opposing the force exerted by the second elastic element, from the first operating position toward the second operating position. When the two hook-shaped contact portions 18, 18' stop interacting reciprocally, as a consequence of the returning force exerted by the first elastic element 21, the coupling lever 15 pivots (counter-clockwise according to the view in figure 4) from the coupling position to the release position of the coupling pin 5 shown in figure 5. During such rotation, the coupling pin 5 is moved away from the limit stop position 9 as a consequence of the action exerted by the thrust arm 16' of the coupling lever itself. It can be observed that the pivoting of the check lever 25 from the first towards the second operating position occurs according to a direction opposite to the pivoting of the coupling lever 15 from the coupling configuration to the locking configuration.

It can be observed that the action of the actuator 30 on the check lever 25 continues until the two hook-shaped contact portions 18, 18' of the respective levers 15, 25 interact. This means that while the coupling lever 15 reaches the release position shown in figure 5, the check lever 25, consequently to the action of the second release element 22, occupies again a position corresponding to the check position, but without any interaction with the coupling lever 15.

As already said above, the reset of the locking unit 10 is substantially automatic when the coupling pin 5 enters again the positioning groove 9. During such insertion, the coupling pin 5 comes into contact with the shaped surface 16" of the thrust arm 16' provoking the pivoting of the coupling pin 15 towards the coupling position. As it can be clearly observed in figure 6, at a certain point of such pivoting, a surface of the first contact portion 18 comes into contact with a hook-shaped surface of the second contact portion 18', provoking the pivoting of the check lever 25 towards the second operating position. As soon as such surfaces stop interacting, as a consequence of their shape the pivoting of the check lever 25 stops and the check lever 25 itself triggers, always as a consequence of the action of the second elastic element 22, according to the opposite direction, namely by occupying again the check position and by locking the position of the coupling lever 15. Thus the reset of the locking unit 10 is completed, namely the condition shown in figure 3 is restored.

The present invention relates also to an industrial vehicle comprising an anchor device according to the invention. In a first possible embodiment, the coupling pin 5 of the device is firmly connected to the chassis of the industrial vehicle, while the locking unit 10' is associated to a tilt cab of the vehicle itself. In an alternative embodiment, the coupling pin 5 is connected to the tilt cab and the locking unit is integral with the chassis of the industrial vehicle.

The anchor device 1 according to the present invention achieves entirely the tasks and the purposes set forth above. In particular the locking unit of the anchor device comprises a limited number of easy to assemble elements. The device according to the invention has improved characteristics of mechanical resistance and of compactness with respect to the solutions known in the art. The overall bulk and the manufacturing costs are remarkably reduced with respect to the known solutions.

The anchor device according to the invention, can be subjected to numerous variations or modification, without departing from the scope of the invention; furthermore all the details may be replaced by others technically equivalent. In practice, the material used and also the dimensions and the shapes may be any, according to the needs and to the state of the art.

## Claims

1. Anchor device (1) for anchoring a tilt cab of an industrial vehicle to the chassis of the industrial vehicle itself, said device (1) comprising a coupling pin (5) and a locking unit (10), the one between said coupling pin (5) and said locking unit (10) being it joined to said cabin, the other between said coupling pin (5) and said locking unit (10) being it joined to said chassis, said locking unit comprising:
- a pair of opposite flanks (8) which define a base plane (3) from which the flank themselves develop, said flanks (8) defining a groove (9) where said coupling pin (5) is inserted, said groove (9) developing according to the direction of said base plane (3) and being, at least partially symmetric, with respect to a reference plane (3') orthogonal to said base plane (3);
- a coupling lever (15) pivoted between said flanks (8) and able to pivot, opposing a first elastic element (21), between a coupling position and a release position of said coupling pin (5), said coupling lever (15) comprising a locking arm (16) which acts directly on said coupling pin (5);
- a check lever (25) pivoted between said flanks (8) in a position opposite to said coupling lever (15) which respect to said reference plane (3'), said check lever (25) being able to pivot, opposing a second elastic element (22), between a first operating position wherein it is able to act on said coupling lever (15) and a second operating position wherein it does not act on said coupling lever (15);
- an actuator (30) which acts on said check lever (25) in order to pivot the latter from said first operating position towards said second operating position,
wherein said check lever (25) comprises a first operating arm (25') which is able to exert a check force on said locking arm (16) when said coupling lever (15) occupies said first coupling position and when said check lever (25) occupies said first operating position, and wherein said check lever (25) pivots around an axis of rotation (102) whose position is comprised between the contact point of said first operating arm (25') with said locking arm (16) and the base plane (3), **characterized in that** said groove (9) defines a limit stop position for said coupling pin (5), said coupling lever (15) pivoting around an axis of rotation (101) which occupies an intermediate position between said base plane (3) and said limit stop position of said coupling pin (5).

2. Device according to claim 1, wherein the axis of rotation (102) of said check lever (25) occupies an intermediate position, with respect to said base plane (3), between the position of the axis of rotation (101) of said coupling lever (15) and the limit stop position of said coupling pin (5) defined by said groove (9).

3. Device according to claim 1 or 2, wherein said check lever (25) comprises a second operating arm (25") opposite with respect to said first operating arm (25') with respect to the axis of rotation (102) of said check lever (25), said actuator (30) being placed between said flanks (8) in a position adjacent to said base plane (3) and exerting an action on said second operating arm (30) directed according to an action direction (105) parallel to said base plane (3) and orthogonal to said axis of rotation (102) of said check lever (25).

4. Device according to any of the claims from 1 to 3, wherein said coupling lever (15) comprises a thrust arm (16') and a connecting portion (17) which connects said thrust arm (16') to said locking arm (16), said connecting portion (17) being shaped with a round sector whose radius corresponds to the one of the coupling pin (5).

5. Device (1) according to any of the claims from 1 to 4, wherein said first elastic element (21) is a helical spring coaxial with the axis of rotation (101) of said coupling lever (15), said helical spring comprising a first end (21') connected to a first pin (71) spacing said flanks (8) and a second end (21") which acts on said coupling lever (15).

6. Device (1) according to any of the claims from 1 to 5, wherein said second elastic element (22) is a helical spring coaxial with the axis of rotation (102) of said check lever (25), said helical spring comprising a first end (22') connected to a second pin (72) spacing said flanks (8) and a second end (22") which acts on said check lever (25).

7. Device (1) according to any of the claims from 1 to 6, wherein said locking arm (16) of said coupling lever (15) comprises a first hook-shaped contact portion (18) and wherein said first operating arm (25') of said check lever (25) comprises a second hook-shaped contact portion (18'), said second hook-shaped contact portion (18') exerting a checking action on said first hook-shaped contact portion (18) when said coupling lever (15) occupies said coupling position and said check lever (25) occupies said first operating position.

8. Industrial vehicle **characterized in that** it comprises an anchor device according to any of the claims from 1 to 7.

## Patentansprüche

1. Verankerungsvorrichtung (1) zum Verankern einer Kipp-Fahrerkabine eines gewerblichen Fahrzeugs an dem Fahrgestell des gewerblichen Fahrzeugs selbst, wobei die Vorrichtung (1) einen Kopplungsbolzen (5) und eine Verriegelungseinheit (10) umfasst, wobei das eine zwischen dem Kopplungsbolzen (5) und der Verriegelungseinheit (10) mit der Kabine gekoppelt ist und das andere zwischen dem Kopplungsbolzen (5) und der Verriegelungseinheit (10) mit dem Fahrgestell gekoppelt ist, wobei die Verriegelungseinheit umfasst:
- ein Paar gegenüberliegender Flanken (8), die eine Basisebene (3) definieren, aus der sich die Flanke selbst entwickelt, wobei die Flanken (8) eine Nut (9) definieren, in der der Kopplungsbolzen (5) eingesetzt ist, wobei sich die Nut (9) gemäß der Richtung der Basisebene (3) entwickelt und zumindest teilweise symmetrisch in Bezug auf eine Referenzebene (3') orthogonal zu der Basisebene (3) ist;
- einen Kopplungshebel (15), der zwischen den Flanken (8) geschwenkt und in der Lage ist, entgegenwirkend einem ersten elastischen Element (21) zwischen einer Kopplungsposition und einer Freigabeposition des Kopplungsbolzens (5) zu schwenken, wobei der Kopplungshebel (15) einen Verriegelungsarm (16) umfasst, der direkt auf den Kopplungsbolzen (5) wirkt;
- einen Sperrhebel (25), der zwischen den Flanken (8) in einer Position entgegengesetzt dem Kopplungshebel (15) in Bezug auf die Referenzebene (3') schwenkbar ist, wobei der Sperrhebel (25) in der Lage ist, entgegen einem zweiten elastischen Element (22) zwischen einer ersten Betriebsposition, in der er in der Lage ist, auf den Kopplungshebel (15) zu wirken, und einer zweiten Betriebsposition zu schwenken, in der er nicht auf den Kopplungshebel (15) wirkt;
- einen Aktuator (30), der auf den Sperrhebel (25) wirkt, um diesen aus der ersten Betriebsposition zu der zweiten Betriebsposition zu schwenken,
wobei der Sperrhebel (25) einen ersten Betriebsarm (25') umfasst, der in der Lage ist, eine Sperrkraft auf den Verriegelungsarm (16) auszuüben, wenn der Kopplungshebel (15) die erste Kopplungsposition besetzt und wenn der Sperrhebel (25) die erste Betriebsposition besetzt, und wobei der Sperrhebel (25) um eine Drehachse (102) schwenkt, dessen Position zwischen dem Kontaktpunkt des ersten Betriebsarmes (25') mit dem Verriegelungsarm (16) und der Basisebene (3) vorgesehen ist, **dadurch gekennzeichnet, dass** die Nut (9) eine Begrenzungsanschlagsposition für den Kopplungsbolzen (5) definiert, wobei der Kopplungshebel (15) um eine Drehachse (101) schwenkt, die eine Zwischenposition zwischen der Basisebene (3) und der Begrenzungsanschlagsposition des Kopplungsbolzens (5) besetzt.

2. Vorrichtung nach Anspruch 1, wobei die Drehachse (102) des Sperrhebels (25) eine Zwischenposition in Bezug auf die Basisebene (3) zwischen der Position der Drehachse (101) des Kopplungshebels (15) und der Begrenzungsanschlagsposition des Kopplungsbolzens (5), die durch die Nut (9) definiert ist, besetzt.

3. Vorrichtung nach einem der Ansprüche 1 oder 2, wobei der Sperrhebel (25) einen zweiten Betriebsarm (25") entgegengesetzt in Bezug auf den ersten Betriebsarm (25') in Bezug auf die Drehachse (102) des Sperrhebels (25) umfasst, wobei der Aktuator (30) zwischen den Flanken (8) in einer Position benachbart der Basisebene (3) angeordnet ist und eine Aktion auf den zweiten Betriebsarm (30) ausübt, die gemäß einer Aktionsrichtung (105) parallel zu der Basisebene (3) und orthogonal zu der Drehachse (102) des Sperrhebels (25) gerichtet ist.

4. Vorrichtung nach einem der Ansprüche 1 bis 3, wobei der Kopplungshebel (15) einen Schubarm (16') und einen Verbindungsabschnitt (17) umfasst, der den Schubarm (16') mit dem Verriegelungsarm (16) verbindet, wobei der Verbindungsabschnitt (17) mit einem runden Sektor geformt ist, dessen Radius dem einen des Kopplungsbolzens (5) entspricht.

5. Vorrichtung (1) nach einem der Ansprüche 1 bis 4, wobei das erste elastische Element (21) eine Schraubenfeder koaxial mit der Drehachse (101) des Kopplungshebels (15) ist, wobei die Schraubenfeder ein erstes Ende (21'), das mit einem ersten Bolzen (71) verbunden ist, der die Flanken (8) beabstandet, und ein zweites Ende (21') aufweist, das auf den Kopplungshebel (15) wirkt.

6. Vorrichtung (1) nach einem der Ansprüche 1 bis 5, wobei das zweite elastische Element (22) eine Schraubenfeder koaxial mit der Drehachse (102) des Sperrhebels (25) ist, wobei die Schraubenfeder ein erstes Ende (22'), das mit einem zweiten Bolzen (72) verbunden ist, der die Flanken (8) beabstandet, und ein zweites Ende (22") umfasst, das auf den Sperrhebel (25) wirkt.

7. Vorrichtung (1) nach einem der Ansprüche 1 bis 6, wobei der Verriegelungsarm (16) des Kopplungshebels (15) einen ersten hakenförmigen Kontaktabschnitt (18) umfasst und wobei der erste Betriebsarm (25') des Sperrhebels (25) einen zweiten hakenförmigen Kontaktabschnitt (18') umfasst, wobei der zweite hakenförmige Kontaktabschnitt (18') eine SperrAktion auf den ersten hakenförmigen Kontaktabschnitt (18) ausübt, wenn der Kopplungshebel (15) die Kopplungsposition besetzt und der Sperrhebel (25) die erste Betriebsposition besetzt.

8. Gewerbliches Fahrzeug, **dadurch gekennzeichnet, dass** es eine Verankerungsvorrichtung nach einem der Ansprüche 1 bis 7 umfasst.

## Revendications

1. Dispositif d'ancrage (1) pour ancrer une cabine basculante d'un véhicule industriel au châssis du véhicule industriel lui-même, ledit dispositif (1) comprenant une cheville d'accouplement (5) et une unité de verrouillage (10), l'une parmi ladite cheville d'accouplement (5) et ladite unité de verrouillage (10) étant jointe à ladite cabine, l'autre parmi ladite cheville d'accouplement (5) et ladite unité de verrouillage (10) étant jointe audit châssis, ladite unité de verrouillage comprenant :
- une paire de flancs opposés (8) qui définissent un plan de base (3) à partir duquel les flancs eux-mêmes se développent, lesdits flancs (8) définissant une rainure (9) où ladite cheville d'accouplement (5) est insérée, ladite rainure (9) se développant selon la direction dudit plan de base (3) et étant, au moins partiellement symétrique, par rapport à un plan de référence (3') orthogonal audit plan de base (3) ;
- un levier d'accouplement (15) pivotant entre lesdits flancs (8) et capable de pivoter, en opposition à un premier élément élastique (21), entre une position d'accouplement et une position de libération de ladite cheville d'accouplement (5), ledit levier d'accouplement (15) comprenant un bras de verrouillage (16) qui agit directement sur ladite cheville d'accouplement (5) ;
- un levier de contrôle (25) pivotant entre lesdits flancs (8) dans une position opposée audit levier d'accouplement (15) par rapport audit plan de référence (3'), ledit levier de contrôle (25) étant capable de pivoter, en opposition à un second élément élastique (22), entre une première position de fonctionnement dans laquelle il est capable d'agir sur ledit levier d'accouplement (15) et une seconde position de fonctionnement dans laquelle il n'agit pas sur ledit levier d'accouplement (15) ;
- un actionneur (30) qui agit sur ledit levier de contrôle (25) afin de faire pivoter ce dernier de ladite première position de fonctionnement vers ladite seconde position de fonctionnement,
dans lequel ledit levier de contrôle (25) comprend un premier bras d'actionnement (25') qui est capable d'exercer une force de contrôle sur ledit bras de verrouillage (16) lorsque ledit levier d'accouplement (15) occupe ladite première position d'accouplement et lorsque ledit levier de contrôle (25) occupe ladite première position de fonctionnement, et dans lequel ledit levier de contrôle (25) pivote autour d'un axe de rotation (102) dont la position est comprise entre le point de contact dudit premier bras d'actionnement (25') avec ledit bras de verrouillage (16) et le plan de base (3), **caractérisé en ce que** ladite rainure (9) définit une position d'arrêt de limite pour ladite cheville d'accouplement (5), ledit levier d'accouplement (15) pivotant autour d'un axe de rotation (101) qui occupe une position intermédiaire entre ledit plan de base (3) et ladite position d'arrêt de limite de ladite cheville d'accouplement (5).

2. Dispositif selon la revendication 1, dans lequel l'axe de rotation (102) dudit levier de contrôle (25) occupe une position intermédiaire, par rapport audit plan de base (3), entre la position de l'axe de rotation (101) dudit levier d'accouplement (15) et la position d'arrêt de limite de ladite cheville d'accouplement (5) définie par ladite rainure (9).

3. Dispositif selon la revendication 1 ou 2, dans lequel ledit levier de contrôle (25) comprend un second bras d'actionnement (25") opposé par rapport audit premier bras d'actionnement (25') par rapport à l'axe de rotation (102) dudit levier de contrôle (25), ledit actionneur (30) étant positionné entre lesdits flancs (8) dans une position adjacente audit plan de base (3) et exerçant une action sur ledit second bras d'actionnement (30) dirigée selon une direction d'action (105) parallèle audit plan de base (3) et orthogonale audit axe de rotation (102) dudit levier de contrôle (25).

4. Dispositif selon une quelconque des revendications 1 à 3, dans lequel ledit levier d'accouplement (15) comprend un bras de poussée (16') et une partie de raccordement (17) qui raccorde ledit bras de poussée (16') audit bras de verrouillage (16), ladite partie de raccordement (17) étant formée avec un secteur rond dont le rayon correspond à celui de la cheville d'accouplement (5).

5. Dispositif (1) selon une quelconque des revendications 1 à 4, dans lequel ledit premier élément élastique (21) est un ressort hélicoïdal coaxial avec l'axe de rotation (101) dudit levier d'accouplement (15), ledit ressort hélicoïdal comprenant une première extrémité (21') raccordée à une première cheville (71) espaçant lesdits flancs (8) et une seconde extrémité (21") qui agit sur ledit levier d'accouplement (15).

6. Dispositif (1) selon une quelconque des revendications 1 à 5, dans lequel ledit second élément élastique (22) est un ressort hélicoïdal coaxial avec l'axe de rotation (102) dudit levier de contrôle (25), ledit ressort hélicoïdal comprenant une première extrémité (22') raccordée à une seconde cheville (72) espaçant lesdits flancs (8) et une seconde extrémité (22") qui agit sur ledit levier de contrôle (25).

7. Dispositif (1) selon une quelconque des revendications 1 à 6, dans lequel ledit bras de verrouillage (16) dudit levier d'accouplement (15) comprend une première partie de contact en forme de crochet (18) et dans lequel ledit premier bras d'actionnement (25') dudit levier de contrôle (25) comprend une seconde partie de contact en forme de crochet (18'), ladite seconde partie de contact en forme de crochet (18') exerçant une action de contrôle sur ladite première partie de contact en forme de crochet (18) lorsque ledit levier d'accouplement (15) occupe ladite position d'accouplement et ledit levier de contrôle (25) occupe ladite première position de fonctionnement.

8. Véhicule industriel **caractérisé en ce qu'**il comprend un dispositif d'ancrage selon l'une quelconque des revendications 1 à 7.
